(19) Europäisches Patentamt
European Patent Office
Office européen des brevets

(11) Publication number: **0 451 292 B1**

# EUROPEAN PATENT SPECIFICATION

(45) Date of publication of patent specification: **12.07.95**

(51) Int. Cl.6: **C09J 7/02**, C08J 5/18, C08J 7/00

(21) Application number: **90915834.7**

(22) Date of filing: **30.10.90**

(86) International application number:
**PCT/JP90/01391**

(87) International publication number:
**WO 91/06611 (16.05.91 91/11)**

(54) **PRESSURE-SENSITIVE ADHESIVE TAPE.**

(30) Priority: **30.10.89 JP 279880/89**

(43) Date of publication of application:
**16.10.91 Bulletin 91/42**

(45) Publication of the grant of the patent:
**12.07.95 Bulletin 95/28**

(84) Designated Contracting States:
**BE DE DK ES FR GB IT LU NL SE**

(56) References cited:
**EP-A- 0 317 237       EP-A- 0 358 445**
**JP-A- 6 176 532       JP-A- 6 176 533**
**JP-A- 6 176 534       JP-A-62 173 251**

(73) Proprietor: **TONEN SEKIYUKAGAKU K.K.**
**1-1, Tsukiji, 4-Chome**
**Chuo-Ku**
**Tokyo 104 (JP)**

(72) Inventor: **TSUKUDA, Haruo**
**Tonen Sekiyukagaku K. K.**
**1-1, Tsukiji 4-chome**
**Chuo-ku**
**Tokyo 104 (JP)**

(74) Representative: **Bawden, Peter Charles et al**
**Esso Chemical Ltd**
**European Patents & Licenses**
**P O Box 1**
**Abingdon**
**Oxon OX13 6BB (GB)**

## Description

Technical Field

The present invention relates to a pressure-sensitive adhesive tape, and more particularly, it is concerned with a polyethylene-based transparent pressure-sensitive adhe sive tape which is superior in low-temperature character istics and $\gamma$-ray resistance.

Background Art

Pressure-sensitive adhesive tapes are required to have different kinds of performance depending on their applications and the fields in which they are used. There have been proposed a variety of tape substrates made of cellophane, polyester, polyolefin, acrylic resin, or the like. To meet a recent requirement for improved cuttability by the blade of a tape dispenser, there have been proposed new tape substrates which are oriented tapes made of polypropylene or a polypropylene composition incorporated with methylpentene polymer or petroleum resin. (See Japa nese patent Laid-open No. 176375/1984 and Japanese Patent Publication No. 995/1980.) Adhesive labels are also known from the intermediate document EP-A-0 358 445.

These conventional pressure-sensitive tapes have improved cuttability by the blade of a tape dispenser however, they still have room for improvement in low-temperature characteristics and $\gamma$ ray resistance and tendency toward straight splitting.

The present invention was completed to address the above-mentioned problems. Accordingly, it is an object of the present invention to provide a transparent pressure-sensitive adhesive tape which has improved low temperature characteristics and $\gamma$ ray resistance and is superior in tendency toward straight splitting. Other objects and novel features of the invention will appear more fully from the following description.

Disclosure of Invention

The gist of the present invention resides in a pressure-sensitive adhesive tape which comprises an oriented polyethylene film or a composite material composed of said film and a woven fabric or the like, and a pressure-sensitive adhesive layer formed on one side of said film or composite material, said film being crosslinked such that the degree of crosslinking decreases with distance across thickness in the direction toward the inside.

According to the present invention, the substrate for the pressure-sensitive adhesive tape is an oriented polyethylene film which is crosslinked such that the degree of crosslinking decreases with distance across thickness in the direction towards the inside. It is produced by forming polyethylene (with a varied density) into a flat or tubular stock sheet by melt extrusion, subsequently irradiating the flat or tubular stock with electron rays from both outer sides such that the degree of crosslinking decreases with distance across its thickness in the direction towards the inside, and finally streching the crosslinked flat or tubular stock in two direction at a temperature lower than the melting point of polyethylene.

The oriented polyethylene film should preferably be made of a polyethylene having a density higher than 0. 935 g/cm$^3$ and a melt index of 0.5-20 g/10 min (measured according to JIS K6760 at 190 °C under a load of 2.16 kg, referred to as MI hereinafter). Moreover it should preferably be crosslinked such that the degree of crosslinking (expressed in terms of gel content) decreases with distance across its thickness in the direction towards the inside, and hence it should be composed of a crosslinked layer, an uncrosslinked layer, and a crosslinked layer arranged one over another. The crosslinked layer should have a gel content of 20-70 wt% and the uncrosslinked layer should have a gel content of 0 wt%. The thickness ratio of the uncrosslinked layer to the crosslinked layers (in total) should preferably be 1:0.1 to 1:10. The draw ratio should be greater than 1.3 time, preferably greater than 3-5 times, in the lengthwise direction, and greater than 3 times, preferably 6-10 times in the widthwise direction. The oriented polyethylene film has a thickness in the range of 10 to 100 $\mu$m. Incidentally, the gel content is expressed in terms of the fraction which remain insoluble after extraction with boiling p xylene.

The above-mentioned polyethylene may be replaced by one which has such a molecular weight distribution that the ratio of HLMI to MI is 40:200 (where HLMI represents "high-load melt index" according to JIS K6760 at 190 °C under a load of 2.16 kg). Other alternatives include a mixture of high-density polyethylene and other polyethylene resins (such as linear low-density polyethylene and low-density polyethylene), or a high-density polyethylene incorporated with hydrogenated petroleum resin.

The above-mentioned oriented polyethylene film may be produced from a proper kind of polyethylene under a proper molding condition according to the application of the pressure-sensitive adhesive tape.

The process for producing the oriented polyethylene film is disclosed in Japanese Patent Laid-open Nos. 174322/1984 and 74819/1986 as well as the above-mentioned references.

According to the present invention, the composite material may be produced by combining the oriented polyethylene film with a cloth (such as woven cloth and non-woven cloth), paper (such as impregnated paper, coated paper, wood-free paper, and kraft-paper), or film of synthetic resin (such as polyester, nylon, and ethylene-vinyl alcohol copolymer). The composite material(laminate) may be obtained by bonding the two components together with a urethane adhesive, vinyl acetate adhesive, acrylic adhesive, or rubber adhesive.

According to the present invention, the abovementioned oriented polyethylene film or a composite material thereof is provided with a pressure sensitive adhesive layer on one side. In the case of composite material, the pressure-sensitive adhesive layer should preferably be formed on the surface of the composite material.

The pressure sensitive adhesive for the pressure sensitive adhesive layer may be selected from solvent type pressure-sensitive adhesive (based on rubber, acrylic compound, or silicone) or non-solvent-type pressure-sensitive adhesive (such as emulsion type, hot-melt type, calendering type, aqueous solution type, and liquid-curable type). The pressure-sensitive adhesive should preferably be incorporated with a tackifier of rosin type, terpene type, or petroleum resin type. Usually, the pressure-sensitive adhesive layer is made of a pressure-sensitive adhesive of acrylic ester type. The pressure-sensitive adhesive layer is usually formed in a thickness of 15-30 $\mu$m.

The pressure-sensitive adhesive tape of the present invention should preferably be coated with a release agent (of silicone type, for example) on the opposite side of the pressure-sensitive adhesive layer, so that it is easily unwound. However, the release agent is not a must in the case where the pressure-sensitive tape does not need a great adhesion strength, because the crosslinked, oriented polyethylene film as the substrate has a certain degree of releasability.

The invention will be described with references to the following examples and comparative examples.

Example 1. Comparative Examples 1-3.

A high-density polyethylene (having a density of 0.957 g/cm$^3$ and an MI of 1.0 g/10 min) was formed into a stock sheet. The stock sheet was crosslinked by irradiation with electron rays so that the gel content in the crosslinked layer, uncrosslinked layer and crosslinked layer was 50, 0, and 50, respectively, with the stock sheet thickness being 500$\mu$m. The crosslinked stock sheet was stretched at 127°C at a draw ratio of 4 and 6 in two directions. Thus there was obtained 20-$\mu$m thick biaxially oriented polyethylene film (referred to as BOHD film hereinafter). This film has a haze value of 2.7% and a moisture permeability of 3.6 g/m$^2$/24 hrs.

Subsequently, the BOHD film (as the substrate) was coated with a pressure-sensitive adhesive of acrylic ester type on its one side. Thus there was obtained a pressure-sensitive tape having a 20 $\mu$m thick pressure sensitive adhesive layer. This pressure-sensitive adhesive tape was tested for low-temperature impact strength, $\gamma$-ray resistance, and tendency toward straight splitting. The results are shown in Table 1.

For comparision, three kinds of pressure sensitive adhesive tapes were prepared by applying the same pressure sensitive adhesive as used in Example 1 to biaxially oriented polypropylene film (OPP, 20-$\mu$m thick), biaxially oriented polyester film (PET, 20-$\mu$m thick), and biaxially oriented nylon film (ONY, 20-$\mu$m thick). They were also tested in the same manner as in Example 1. The results are shown in Table 1.

The low-temperature impact resistance was measured at -10 °C, -20 °C, and -30°C using a film impact tester (made by Toyo Seiki Co. Ltd.). The value is expressed in terms of an impact force required for the pendulum to penetrate the sample (pressure-sensitive tape) fixed to the clamp ring.

The $\gamma$-ray resistance is expressed in terms of tensile strength and elongation of 15 mm wide pressure sensitive tape samples measured in the lengthwise direction according to ASTM D-882 after irradiation with $\gamma$-ray at 1 Mrad, 3 Mrad, and 5 Mrad.

The pressure-sensitive adhesive tape is rated as good or poor in tendency toward straight splitting according to whether it cuts straight or not when it is broken by hand at a notch made in it.

Example 2.

The BOHD film obtained in Example 1 was laminated with a plain weave cotton fabric by a urethane-based adhesive to make a substrate. The fabric was coated with a pressure sensitive adhesive of acrylic ester type in a 20-μm thic layer. Thus there was obtained a pressure-sensitive adhesive tape. It was easy to cut with a tape dispenser or by hand. It was tested for low-temperature impact strength, γ ray resistance, and tendency toward straight splitting in the same manner as in Example 1. The result are shown in Table 1.

Table 1

| | Substrate | Low-temperature impact strength (kgf·cm) | | | γ-ray resistance | | | | | | | | Tendency to straight splitting |
| | | -10°C | -20°C | -30°C | 0 Mrad | | 1 Mrad | | 3 Mrad | | 5 Mrad | | |
| | | | | | Tensile strength (kg/cm²) | Elongation (%) | Tensile strength (kg/cm²) | Elongation (%) | Tensile strength (kg/cm²) | Elongation (%) | Tensile strength (kg/cm²) | Elongation (%) | |
| Example 1 | BOHD | 13.8 | 12.7 | 11.7 | 1130 | 62 | 1080 | 60 | 1040 | 65 | 1040 | 71 | good |
| Comparative Example 1 | OPP | 13.3 | 9.1 | 9.5 | 1020 | 71 | 910 | 60 | 770 | 45 | 700 | 39 | poor |
| Comparative Example 2 | PET | 6.3 | 5.1 | 5.6 | – | – | – | – | – | – | – | – | poor |
| Comparative Example 3 | ONY | 15.2 | 10.1 | 7.3 | – | – | – | – | – | – | – | – | poor |
| Example 2 | BOHD plus woven fabric | NB | NB | NB | 800 | 50 | 750 | 50 | 740 | 50 | 720 | 50 | good |

NB : not broken

4

**Claims**

1. A pressure-sensitive adhesive tape which comprises an oriented polyethylene film or a composite material composed of said film and a woven fabric, and a pressure-sensitive layer formed on one side of the film or composite material, the film being cross-linked with a gel content at its surfaces of 20 to 70 wt%, and wherein the degree of crosslinking decreases from both surfaces of the film with distance across its thickness in the direction towards the inside of the film, adhesive tapes which are adhesive labels being excluded.

2. A tape according to claim 1, wherein the pressure-sensitive layer comprises a pressure-sensitive adhesive incorporating a petroleum resin.

3. A tape according to claim 1 or claim 2, wherein the film is of high density polyethylene incorporating a hydrogenated petroleum resin.

**Patentansprüche**

1. Haftklebeband, das eine orientierte Polyethylenfolie oder ein Verbundmaterial, das aus dieser Folie und einem Gewebe besteht, und eine Haftschicht umfaßt, die auf einer Seite der Folie oder des Verbundmaterials gebildet ist, wobei die Folie vernetzt ist mit einem Gelgehalt an ihren Oberflächen von 20 bis 70 Gew.% und der Vernetzungsgrad von beiden Oberflächen der Folie mit dem Abstand entlang ihrer Dicke in Richtung zum Inneren der Folie abnimmt, wobei Klebebänder, die Klebeetiketten sind, ausgeschlossen sind.

2. Band nach Anspruch 1, bei dem die Haftschicht einen Haftklebstoff umfaßt, dem ein Erdölharz beigefügt ist.

3. Band nach Anspruch 1 oder Anspruch 2, bei dem die Folie aus Polyethylen mit hoher Dichte ist, dem ein hydriertes Erdölharz beigefügt ist.

**Revendications**

1. Ruban adhésif sensible à la pression, qui comprend un film de polyéthylène orienté ou une matière composite constituée dudit film d'une étoffe tissée, et une couche sensible à la pression formée sur une face du film ou de la matière composite, le film étant réticulé à une teneur en gel de 20 à 70 % en poids au niveau de ses surfaces, le degré de réticulation diminuant à partir des deux surfaces du film en fonction de la distance à travers l'épaisseur de ce film dans la direction vers l'intérieur du film, les rubans adhésifs qui sont des étiquettes adhésives étant exclus.

2. Ruban suivant la revendication 1, dans lequel la couche sensible à la pression comprend un adhésif sensible à la pression renfermant une résine dérivée du pétrole.

3. Ruban suivant la revendication 1 ou la revendication 2, dans lequel le film est un film de polyéthylène haute densité renfermant une résine hydrogénée dérivée du pétrole.